# EUROPÄISCHE PATENTANMELDUNG

(11) **EP 4 623 666 A1**
(43) Veröffentlichungstag der Anmeldung: **01.10.2025**
(21) Anmeldenummer: 25155354.1
(22) Anmeldetag: 31.01.2025
(51) Int. Cl.: A01D 41/127, A01D 41/14, A01D 75/18, A01F 12/16, A01D 43/08

(54) **LANDWIRTSCHAFTLICHE ERNTEMASCHINE**

(30) Priorität: 27.03.2024 DE 102024108695
(71) Anmelder: CLAAS Selbstfahrende Erntemaschinen GmbH, 33428 Harsewinkel (DE)
(72) Erfinder: Miller, Samuel, 88416 Steinhausen (DE); Reinhardt, Martin, 88367 Hohentengen (DE); Fischer, Josef, 88400 Biberach (DE)
(74) Vertreter: Budach, Steffen

(57) **Zusammenfassung**

Die vorliegende Erfindung betrifft eine landwirtschaftliche Erntemaschine (1), umfassend eine in einem Einzuggehäuse (7) angeordnete Einzugvorrichtung (6), ein an dem Einzuggehäuse (7) angeordnetes Vorsatzgerät (2) zur Aufnahme von Erntegut sowie zumindest ein der Einzugvorrichtung (6) nachgeordnetes Arbeitsaggregat (11), wobei dem Vorsatzgerät (2) eine Fremdkörperdetektionseinrichtung zugeordnet ist, welche dazu ausgeführt und eingerichtet ist, nichtmetallische Fremdkörper (FK) im Gutstrom innerhalb des Vorsatzgerät (2) zu detektieren.

## Beschreibung

Die vorliegende Erfindung betrifft eine landwirtschaftliche Erntemaschine gemäß dem Oberbegriff des Anspruches 1.

Aus der EP 1 632 128 A1 ist eine als Feldhäcksler ausgeführte landwirtschaftliche Erntemaschine bekannt, die eine in einem Einzuggehäuse angeordnete Einzugvorrichtung, ein an dem Einzuggehäuse angeordnetes Vorsatzgerät zur Aufnahme von Erntegut sowie zumindest ein der Einzugvorrichtung nachgeordnetes Arbeitsaggregat umfasst. Um eine Beschädigung des der Einzugvorrichtung nachgeordneten Arbeitsaggregates durch einen in der Einzugvorrichtung detektierten Fremdkörper zu vermeiden, ist eine Vorrichtung zum Auslösen eines Stillstands der Einzugvorrichtung vorgesehen. Hierdurch soll die Weiterförderung des Fremdkörpers unterbunden werden.

Nachteilig am vorstehend genannten Stand der Technik ist, dass der Fremdkörper die Einzugvorrichtung erreichen und zumindest teilweise passieren muss, um detektiert zu werden. Bei einer als Feldhäcksler ausgeführten landwirtschaftlichen Erntemaschine umfasst die Einzugvorrichtung im Einzuggehäuse paarweise angeordnete Einzugwalzen, von denen die unteren Einzugwalzen ortsfest sind und die oberen Einzugwalzen in vertikaler Richtung beweglich. Die Einzugwalzen bestehen aus einem amagnetischen Stahl, wodurch diese in der Herstellung kostenintensiv sind. Der Fremdkörper wird gemäß der EP 1 632 128 A1 erst erkannt, wenn dieser zumindest das vordere Einzugwalzenpaar passiert hat, was zu einer Beschädigung der Einzugwalzen führen kann.

Ausgehend vom vorstehend genannten Stand der Technik liegt der Erfindung die Aufgabe zugrunde diesen Nachteil zu vermeiden.

Diese Aufgabe wird erfindungsgemäß durch eine landwirtschaftliche Erntemaschine mit den Merkmalen des Anspruches 1 gelöst. Vorteilhafte Weiterbildungen sind Gegenstand der abhängigen Ansprüche.

Gemäß dem Anspruch 1 wird eine landwirtschaftliche Erntemaschine vorgeschlagen, welche eine in einem Einzuggehäuse angeordnete Einzugvorrichtung, ein an dem Einzuggehäuse angeordnetes Vorsatzgerät zur Aufnahme von Erntegut sowie zumindest ein der Einzugvorrichtung nachgeordnetes Arbeitsaggregat umfasst. Erfindungsgemäß ist vorgesehen, dass die Erntemaschine eine Fremdkörperdetektionseinrichtung umfasst, welche dazu ausgeführt und eingerichtet ist, nichtmetallische Fremdkörper im Gutstrom innerhalb des Vorsatzgerätes und/oder des Einzuggehäuses zu detektieren.

Die Zuordnung der Fremdkörperdetektionseinrichtung zum Vorsatzgerät und/oder dem Einzuggehäuse hat den Vorteil, dass das Auftreten eines nichtmetallischen Fremdkörpers im aufgenommenen Erntegut, insbesondere eines Steins, detektiert werden kann, bevor dieser die Einzugvorrichtung oder das der Einzugvorrichtung nachgeordnete Arbeitsaggregat der landwirtschaftlichen Erntemaschine erreicht und dort kostenintensive Schäden verursachen kann. Die Detektion eines nichtmetallischen Fremdkörpers erfolgt dabei unabhängig von der Höhe der Erntegutschicht in der Einzugvorrichtung, wodurch die Erkennung auch von kleineren Fremdkörpern verbessert werden kann. Ebenso ist die Detektion von Fremdkörpern und die Reaktion auf die Detektion eines Fremdkörpers unabhängig von der Einzugsgeschwindigkeit in der Einzugvorrichtung.

Bevorzugt kann die Fremdkörperdetektionseinrichtung zumindest einen Sensor aufweisen, der als Mikrofon und/oder Körperschallsensor ausgeführt ist, sowie eine Auswerteeinheit zur Auswertung der von dem zumindest einen Sensor bereitgestellten Signale. Mittels des zumindest einen als Mikrofon und/oder Körperschallsensor ausgeführten Sensors lassen sich Geräusche, d.h. akustische Signale, die der Fremdkörper beim Auftreffen auf ein Bauteil oder einen längeren physischen Kontakt mit einem Bauteil des Vorsatzgerätes und/oder des Einzuggehäuses, beispielsweise durch Gleiten entlang einer Oberfläche des Bauteils, erzeugt und vom Bauteil und/oder über die Luft übertragen werden, erfassen und durch die Auswerteeinheit analysieren.

Insbesondere kann der zumindest eine Sensor an und/oder in einem Bauteil des Vorsatzgerätes und/oder des Einzuggehäuses angeordnet sein, wobei das Bauteil als Resonanzkörper dienen kann. Das Bauteil als Resonanzkörper kann eine vorteilhafte Verstärkung des akustischen Signals bewirken, so dass die Detektion des Auftretens des Fremdkörpers im Vorsatzgerät und/oder dem Einzuggehäuse verbessert werden kann. Eine Anordnung des zumindest einen Sensors in einem Bauteil des Vorsatzgerätes und/oder des Einzuggehäuses bietet darüber hinaus den Vorteil des Schutzes des zumindest einen Sensors vor Verschmutzung, Feuchtigkeit und/oder mechanischen Beschädigungen. Ein weiterer Vorteil der Anordnung des zumindest einen Sensors in einem Bauteil des Vorsatzgerätes und/oder des Einzuggehäuses ist die Abschirmung oder zumindest Dämpfung von Umgebungsgeräuschen, die Einfluss auf die Auswertung der erfassten akustischen Signale haben können.

Gemäß einer Weiterbildung kann der zumindest eine Sensor am Gehäuse und/oder am Rahmen des Vorsatzgerätes und/oder des Einzuggehäuses angeordnet sein.

Gemäß einer Weiterbildung kann der zumindest eine Sensor an und/oder in einem Bodenelement des Vorsatzgerätes angeordnet ist, wobei das Bodenelement im Wesentlichen plattenförmig und/oder als Hohlkörper ausgebildet sein kann. Die Ausgestaltung des Bodenelementes als insbesondere plattenförmiger Hohlkörper vereint die Vorteile des Resonanzkörpers als Bauteil, an dem der zumindest eine Sensor angeordnet ist und die der Integration des zumindest einen Sensors in das Bauteil. Zudem können Fremdkörper aufgrund ihres gegenüber dem Erntegut in der Regel höheren Gewichts und/oder ihrer runderen Form mit dem Bodenelement in Berührung kommen, was eine frühzeitige Detektion ermöglicht. Das Bodenelement kann als ein den Gutfluss im Vorsatzgerät begrenzendes Bodenblech ausgeführt sein.

Bevorzugt können mehrere Sensoren zueinander räumlich beabstandet entlang des Gutflussverlaufes an und/oder in dem Vorsatzgerät und/oder dem Einzuggehäuse angeordnet sein, um den Fremdkörper zeitlich versetzt zu detektieren. Hierdurch kann zum einen die Wahrscheinlichkeit einer Detektion eines vom Vorsatzgerät aufgenommenen Fremdkörpers erhöht werden. Zum anderen lässt sich die Genauigkeit der Bestimmung der Art des Fremdkörpers verbessern, wenn dieser mehrfach detektiert wird.

Weiter bevorzugt können mehrere Sensoren zueinander räumlich beabstandet nebeneinander an und/oder in dem Vorsatzgerät und/oder dem Einzuggehäuse angeordnet sein, um den Fremdkörper räumlich zu detektieren. Hierdurch kann die Bestimmung der Lage respektive Position des Fremdkörpers im Vorsatzgerät und/oder im Einzuggehäuse verbessert werden. Die genauere Kenntnis der Lage des Fremdkörpers kann das Beseitigen durch einen Bediener vereinfachen und beschleunigen. Es wird eine verbesserte Lokalisierung des Fremdkörpers im Vorsatzgerät und/oder dem Einzuggehäuse ermöglicht, durch welche der Bediener bei der Suche im Erntegut unterstützt wird.

Die Anordnung mehrerer Sensoren nebeneinander kann symmetrisch oder asymmetrisch vorgesehen sein. Insbesondere kann die Auswerteeinheit dazu eingerichtet sein, die akustisch bestimmte Lage des Fremdkörpers als Information mittels einer Benutzerschnittstelle an eine Bedienperson auszugeben. Bevorzugt kann die Information der Lage des Fremdkörpers durch die Benutzerschnittstelle visualisiert werden.

Gemäß einer bevorzugten Weiterbildung können im unteren Bereich des Einzuggehäuses der Einzugvorrichtung zumindest zwei untere Einzugwalzen angeordnet sein und im oberen Bereich des Einzuggehäuses zumindest eine vordere Presswalze und zumindest eine hintere Presswalze höhenbeweglich an zumindest einem Lenker gelagert angeordnet sein, wobei wenigstens eine der Presswalzen durch Vorpresszylinder oder Zugfedern vorgespannt ist, wobei in einer der Einzugwalzen wenigstens ein zusätzlicher als Mikrofon und/oder Körperschallsensor ausgeführter Sensor angeordnet ist. Bevorzugt ist der wenigstens eine zusätzliche als Mikrofon und/oder Körperschallsensor ausgeführte Sensor in der vorderen Presswalze angeordnet. Insbesondere können die zumindest zwei Presswalzen durch Vorpresszylinder vorgespannt sein.

Gemäß einer Weiterbildung kann die Auswerteeinheit zum Ausführen einer Sensorfusion bezüglich der Daten der als Mikrofone und/oder Körperschallsensoren ausgeführten Sensoren zumindest des Vorsatzgerätes ausgeführt und eingerichtet sein. Mittels der Sensorfusion lassen sich Ausgaben einer Vielzahl von Sensoren zum Erkennen eines Objekts mit größerer Genauigkeit integrieren.

Weiterhin kann der Einzugvorrichtung eine Regeleinrichtung zugeordnet sein, welche eine Recheneinheit und eine Speichereinheit umfasst, in welcher zumindest ein Kennlinienfeld hinterlegt oder hinterlegbar ist, welches von der Recheneinheit zur Analyse des Vorhandenseins eines Fremdkörpers in der Einzugvorrichtung verwendet wird, wobei die Recheneinheit dazu eingerichtet ist, von der Fremdkörperdetektionseinrichtung bereitgestellte Daten zur Adaption des zumindest einen Kennlinienfeldes zu verwenden. Auf diese Weise kann die Qualität der Detektion von Fremdkörpern in der Einzugvorrichtung verbessert. Mögliche Fehlabschaltungen lassen sich dadurch weiter reduzieren. Insbesondere kann wenigstens ein regelbar mit Druck beaufschlagter Dämpfungszylinder zur Dämpfung einer Ausweichbewegung einer der Presswalzen mit einem Ende an dem zumindest einen Lenker und mit seinem anderen Ende am Einzuggehäuse angelenkt ist, wobei durch Auswertung von sensorisch erfassten Drucksignalen, die auf einen im Dämpfungszylinder und/oder der Vorpresszylinder detektierten Druckanstieg zurückgehen, auf das Vorhandensein eines Fremdkörpers in der Einzugvorrichtung geschlossen wird. Bevorzugt erfolgt die Auswertung von Drucksignalen, die auf einen im Dämpfungszylinder detektierten Druckanstieg zurückgehen, um auf das Vorhandensein eines Fremdkörpers zu schließen.

Bevorzugt kann an der Unterseite des Vorsatzgerätes zumindest eine durch Fremdkraft betätigbare Abscheidevorrichtung angeordnet sein, durch welche ein detektierter Fremdkörper abscheidbar ist, wobei die Abscheidevorrichtung zumindest ein im Bodenelement angeordnetes Verschlusselement umfasst, welches dazu eingerichtet ist, sich zwischen zwei Positionen zu bewegen, in welchen das zumindest eine Verschlusselement zumindest eine Ausschleuseöffnung entweder freigibt oder verschließt. Vorteilhaft ist dabei, dass die Abscheidung des aufgenommenen Fremdkörpers während des laufenden Erntevorgangs erfolgen kann. Eine Unterbrechung der Vorwärtsbewegung der Erntemaschine ist, abhängig vom Ort und/oder Zeitpunkt der Detektion des Fremdkörpers, insbesondere bei der Detektion im Vorsatzgerät, nicht zwingend erforderlich.

Hierbei kann das Verschlusselement einteilig und sich im Wesentlichen über die Breite des Bodenelementes erstreckend ausgeführt sein. Somit kann sich die Ausschleuseöffnung im Wesentlichen über die Breite des Bodenelementes erstrecken.

Insbesondere kann die Abscheidevorrichtung passiv durch den auszuschleusenden Fremdkörper oder aktiv durch zumindest einen Aktuator betätigbar sein. Die passive Betätigung der Abscheidevorrichtung kann durch die Gewichtskraft des auszuschleusenden Fremdkörpers bewirkt werden. Eine aktive Betätigung der Abscheidevorrichtung durch den zumindest einen Aktuator wird in Abhängigkeit von der Detektion des Fremdkörpers durch die Fremdkörperdetektionseinrichtung initiiert.

Alternativ können mehrere einzelne Verschlusselement nebeneinander angeordnet sein. Insbesondere können die einzelnen Verschlusselemente voneinander unabhängig zwischen den zwei Positionen bewegbar sein, so dass die zumindest eine Ausschleuseöffnung zum Ausschleusen des Fremdkörpers nur einen Teil des Bodenelementes freigibt. Dies hat den Vorteil, dass der Anteil an mit dem Fremdkörper ausgeschleusten Erntegut minimiert werden kann. Weiterhin können die Breite des Bodenelementes verteilt an zwei oder mehr Stellen Ausschleuseöffnungen durch die einzelnen Verschlusselemente freigegeben werden.

Das zumindest eine Verschlusselement kann als ein klappenförmiges Bauteil ausgeführt sein, welches bezüglich einer Drehachse positionsveränderbar ist. Das zumindest eine Verschlusselement um eine Drehachse schwenkbar angeordnet sein. Dazu kann das zumindest eine Verschlusselement an der Drehachse angelenkt sein. Alternativ kann das zumindest eine Verschlusselement mittels eines Viergelenkes oder eines Parallelgramms um die Drehachse schwenkbar sein.

Das zumindest eine Verschlusselement kann dazu ausgeführt und angeordnet sein, dass es die zumindest eine Ausschleuseöffnung in Bewegungsrichtung oder entgegen der Bewegungsrichtung der Erntemaschine freigibt.

Weiter bevorzugt kann die Fremdkörperdetektionseinrichtung dazu ausgeführt und eingerichtet sein, bei der Detektion eines Fremdkörpers einen Aktuator zur Betätigung des zumindest einen Verschlusselementes anzusteuern.

Insbesondere kann die Fremdkörperdetektionseinrichtung dazu ausgeführt und eingerichtet sein, das Öffnen des zumindest einen Verschlusselementes georeferenziert aufzuzeichnen und abzuspeichern. Auf diese Weise lassen sich die durch das Verschlusselement abgeschiedenen Fremdkörper nach der Bearbeitung eines Feldes einfacher auffinden und bergen.

Gemäß einer Weiterbildung kann der zumindest eine Sensor auf zumindest einer stehenden Welle im Inneren von rotierenden schneckenförmigen und/oder walzenförmigen Elementen des Vorsatzgerätes und/oder der Einzugvorrichtung angeordnet sein. Der zumindest eine Sensor rotiert dabei nicht mit dem schneckenförmigen und/oder walzenförmigen Element des Vorsatzgerätes und/oder der Einzugvorrichtung, in welches der zumindest eine Sensor integriert ist. Somit kann auf den Einsatz von störanfälligen Drehüberträgern verzichtet werden.

Insbesondere kann das Vorsatzgerät beispielsweise als Aufnahmevorrichtung für eine landwirtschaftliche Erntemaschine wie einen Feldhäcksler, einen Mähdrescher, einen Ladewagen oder eine Ballenpresse ausgeführt sein. Die Aufnahmevorrichtung kann eine Aufsammeltrommel zum Aufsammeln von am Boden liegendem Erntegut aufweisen sowie einen von einem Gehäuse umgebenen Erntegutkanal, der das aufgesammelte Erntegut aufnimmt, der durch einen rotierende Rollen umfassenden Niederhalter begrenzt ist. Der Aufsammeltrommel nachgeordnet ist eine Förderschnecke im Gehäuse der Aufnahmevorrichtung angeordnet. Der zumindest eine Sensor kann in der Aufsammeltrommel, in der Förderschnecke und/oder in einer oder beiden Rollen des Niederhalters angeordnet sein.

Ein weiteres Beispiel für ein rotierendes schneckenförmiges Element eines Vorsatzgerätes sind als Einzugelemente ausgeführte Querförderschnecken, wie sie auch bei einem als Schneidwerk ausgeführten Vorsatzgerät für eine als selbstfahrender Mähdrescher ausgeführte landwirtschaftliche Erntemaschine zur Anwendung kommen.

Die vorliegende Erfindung wird nachstehend anhand eines in den Zeichnungen dargestellten Ausführungsbeispieles näher erläutert.

Es zeigen:
- Fig. 1: schematisch und exemplarisch einen vorderen Teil einer landwirtschaftlichen Erntemaschine mit einem daran angeordneten Vorsatzgerät;
- Fig. 2: schematisch und exemplarisch eine Teilansicht eines als Aufnahmevorrichtung ausgeführten Vorsatzgerätes;
- Fig. 3: schematisch und exemplarisch eine Ansicht der Aufnahmevorrichtung gemäß Fig. 2 im Längsschnitt;
- Fig. 4: schematisch und exemplarisch eine Teilansicht der Aufnahmevorrichtung gemäß Fig. 2 in einer perspektivischen Ansicht von der Seite;
- Fig. 5: schematisch und exemplarisch eine Teilschnittansicht einer Einzugvorrichtung einer als Feldhäcksler ausgeführten Erntemaschine; und
- Fig. 6: schematisch und exemplarisch eine Teilansicht der Einzugvorrichtung des Feldhäckslers von der Seite.

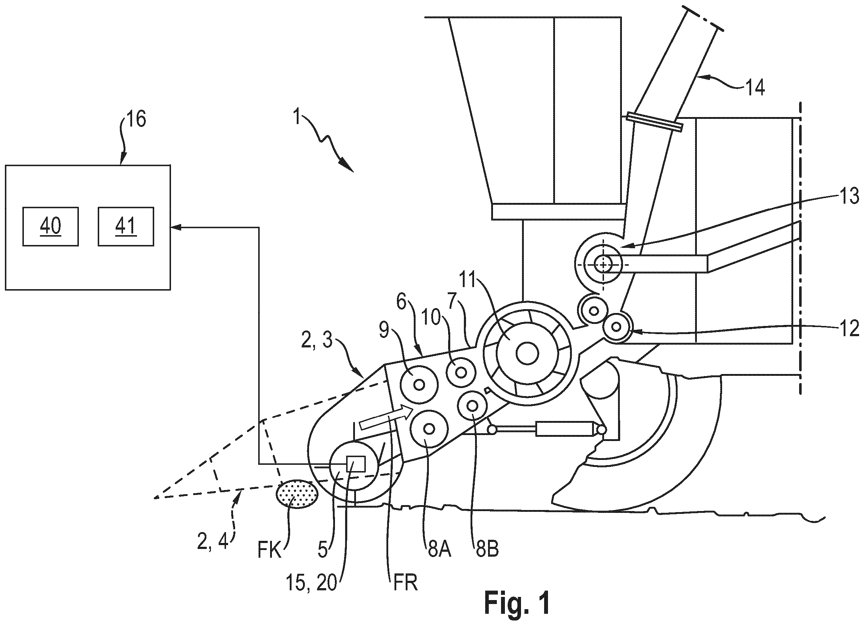

In Fig. 1 ist schematisch und exemplarisch ein vorderer Teil einer landwirtschaftlichen Erntemaschine 1 mit einem daran angeordneten Vorsatzgerät 2 dargestellt. Die Erntemaschine 1 ist im dargestellten Ausführungsbeispiel als selbstfahrender Feldhäcksler ausgeführt. Das Vorsatzgerät 2 ist im dargestellten Ausführungsbeispiel als Aufnahmevorrichtung 3 ausgeführt. Das als Aufnahmevorrichtung 3 ausgeführte Vorsatzgerät 2 kann auch an einem als Mähdrescher, einer als Ballenpresse oder einem als Ladewagen ausgeführten landwirtschaftlichen Erntemaschine 1 angeordnet sein.

Das Vorsatzgerät 2 kann anstelle der Aufnahmevorrichtung 3 beispielsweise auch als ein Maiserntevorsatz 4, einem sogenannten Maisgebiss, ausgeführt sein, welcher strichliniert angedeutet ist. Die landwirtschaftliche Erntemaschine 1 kann auch als selbstfahrender Mähdrescher mit einem daran angeordneten Vorsatzgerät 2, beispielsweise einem Schneidwerk, ausgeführt sein.

Die Aufnahmevorrichtung 3 umfasst eine Aufsammeltrommel 5 zum Aufsammeln von am Boden liegendem Erntegut, einen Erntegutkanal, der das aufgesammelte Erntegut aufnimmt, der durch einen - in Fig. 1 nicht dargestellten - Niederhalter 18 begrenzt ist. Die Weite des Erntegutkanals ist durch Verstellen des Niederhalters 18 veränderbar.

Das Vorsatzgerät 2 ist am Einzuggehäuse 7 einer Einzugvorrichtung 6 angeordnet. Im unteren Bereich des Einzuggehäuses 7 sind ortsfeste Einzugwalzen 8A, 8B angeordnet. Im oberen Bereich des Einzuggehäuses 7 sind eine vordere Presswalze 9, auch als Vorpresswalze bezeichnet, und eine hintere Presswalze 10 angeordnet. Die Vorpresswalze 9 ist in Förderrichtung FR gesehen vor der Presswalze 10 angeordnet. Der Vorpresswalze 9 und der Presswalze 10 gegenüberliegend sind die ortsfesten Einzugwalzen 8A, 8B angeordnet.

Bei einer Ausführung der landwirtschaftlichen Erntemaschine 1 als selbstfahrender Mähdrescher bildet der in dem Einzuggehäuse 7 angeordnete Schrägförderer die Einzugvorrichtung. Eine Dreschvorrichtung bildet das zumindest eine der Einzugvorrichtung nachgeordnete Arbeitsaggregat.

Das von dem Vorsatzgerät 2 aufgenommene Erntegut gelangt zur Vorverdichtung in die Einzugvorrichtung 6. Hierzu wird von dem als Aufnahmevorrichtung 3 ausgeführten Vorsatzgerät 2 aufgenommene Erntegut durch eine Förderschnecke 21 der Einzugvorrichtung 6 zugeführt.

Das von dem Vorsatzgerät 2 aufgenommene Erntegut wird über die Einzugwalzen 8A, 8B und die Presswalzen 9, 10 zu einer Messertrommel 11 geleitet, die das Erntegut in Zusammenwirken mit einer Gegenschneide zerkleinert. Das zerkleinerte Erntegut wird gegebenenfalls durch sogenannte Crackerwalzen einer Konditioniervorrichtung 12 weiter aufbereitet und, unterstützt durch eine Nachbeschleunigervorrichtung 13 einem Auswurfkrümmer 14 zugeführt.

Dem Vorsatzgerät 2 ist eine Fremdkörperdetektionseinrichtung zugeordnet, welche dazu ausgeführt und eingerichtet ist, mit dem Erntegut aufgenommene nichtmetallische Fremdkörper FK im Gutstrom innerhalb des Vorsatzgerätes 2 zu detektieren. Die Fremdkörperdetektionseinrichtung weist dazu zumindest einen Sensor 15 sowie eine Auswerteeinheit 16 auf. Die Auswerteeinheit 16 ist zur Auswertung der von dem zumindest einen Sensor 15 bereitgestellten Signale ausgeführt und eingerichtet.

Bevorzugt kann die Auswerteeinheit 16 dazu eingerichtet sein, das Auftreten eines Fremdkörpers FK basierend auf dem Überschreiten eines Schwellenwertes zu identifizieren.

Insbesondere können zur Bestimmung des Vorhandenseins des Fremdkörpers FK im Vorsatzgerät 2 für verschiedene Arten von Fremdkörpern Signalmusterverläufe in der Auswerteeinheit 16 der Fremdkörpernachweiseinrichtung hinterlegbar oder hinterlegt sein, die zur Bestimmung des Vorhandenseins des Fremdkörpers FK herangezogen werden.

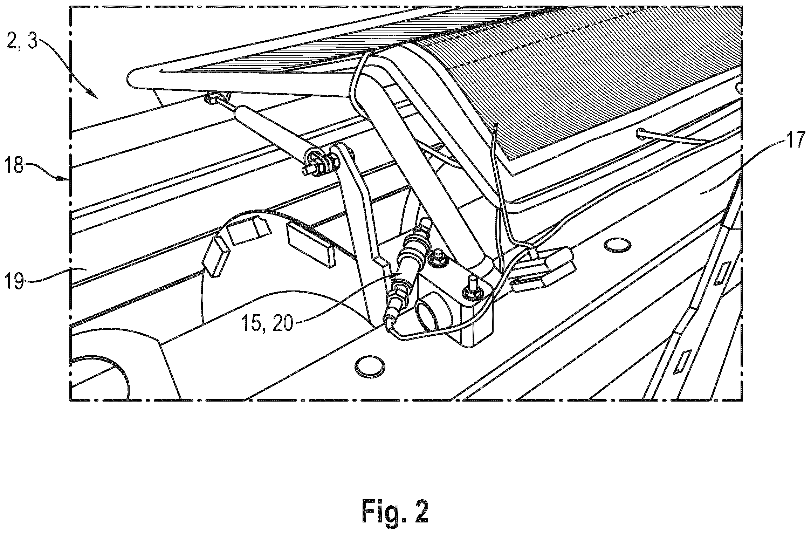

Die Darstellung in Fig. 2 zeigt schematisch und exemplarisch eine Teilansicht des als Aufnahmevorrichtung 3 ausgeführten Vorsatzgerätes 2 von schräg hinten. Die Aufnahmevorrichtung 3 weist ein Gehäuse 17 auf, in welchem die rotierend angetriebene Aufsammeltrommel 5 zum Aufsammeln von am Boden liegendem Erntegut angeordnet ist. Das Gehäuse 17 umgibt den Erntegutkanal, der das aufgesammelte Erntegut aufnimmt.

Der Erntegutkanal ist durch den rotierende Rollen 19 umfassenden Niederhalter 18 begrenzt.

Der zumindest eine Sensor 15 ist hier und vorzugsweise als Mikrofon 20 und/oder Klopfsensor ausgeführt.

Der zumindest eine Sensor 15 ist an und/oder in einem Bauteil des Vorsatzgerätes 2 angeordnet. Im dargestellten Ausführungsbeispiel ist der zumindest eine Sensor 15 auf der Oberseite des Gehäuses 15 als Bauteil an diesem angeordnet.

Der zumindest eine Sensor 15 kann alternativ oder zusätzlich am Gehäuse 15 und/oder am Rahmen des Vorsatzgerätes 2 angeordnet sein. Die Position und Anordnung des zumindest einen Sensors 15 am Gehäuse 15 und/oder am Rahmen ist dabei von der Art des Vorsatzgerätes 2 abhängig.

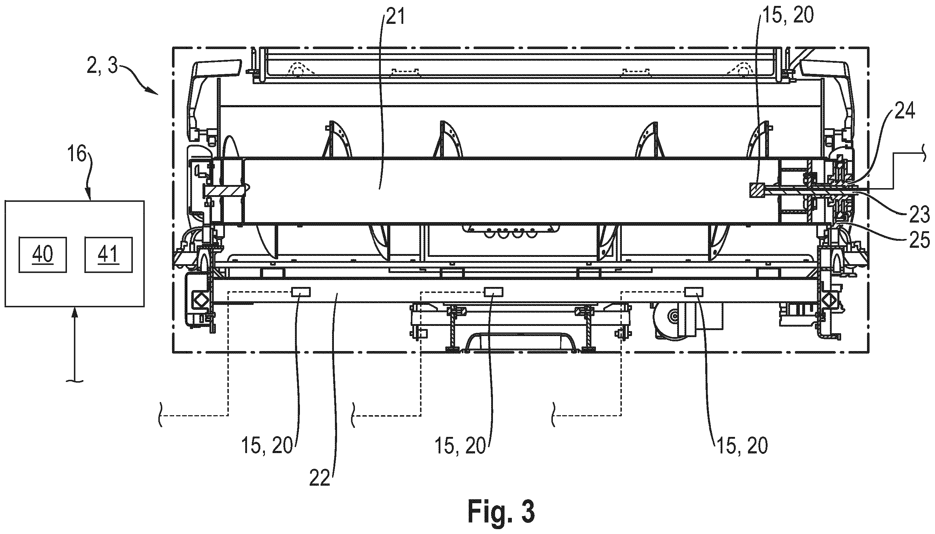

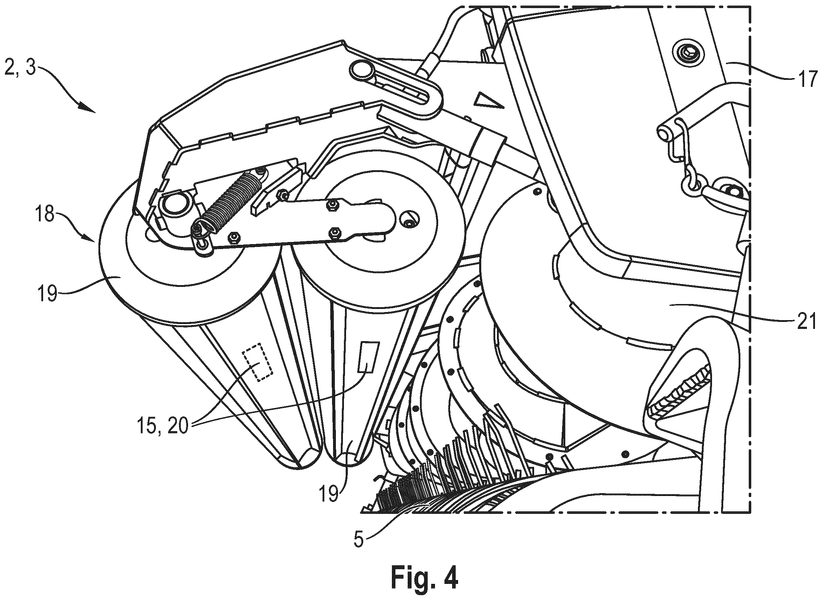

Der zumindest eine Sensor 15 kann alternativ oder zusätzlich in einem Bauteil des Vorsatzgerätes 2 angeordnet sein, wie in Fig. 3 und 4 beispielhaft dargestellt. Dabei kann das Bauteil, in welchem der zumindest eine Sensor 15 angeordnet bzw. in welches der zumindest eine Sensor 15 integriert ist, als Resonanzkörper dienen. Vorteilhat ist zudem, dass durch die Anordnung des zumindest einen Sensors 15 im Inneren eines Bauteiles das Bauteil den zumindest einen Sensor 15 zusätzlich vor äußeren Einflüssen schützt bzw. abschirmt.

Mittels des zumindest einen als Mikrofon 20 und/oder Körperschallsensor ausgeführten Sensors 15 lassen sich Geräusche, d.h. akustische Signale, die der Fremdkörper FK beim Auftreffen auf ein Bauteil oder einen längeren physischen Kontakt mit einem Bauteil des Vorsatzgerätes 2 erzeugt und vom Bauteil als Körperschall oder über die Luft übertragen werden, erfassen und durch die Auswerteeinheit 16 analysieren. Dabei kann die Analyse der durch den zumindest einen Sensor 15 erfassten Geräusche auf ein spezifisches Frequenzspektrum begrenzt werden, welches für massive nichtmetallische Fremdkörper FK charakteristisch ist.

Durch die Integration des zumindest einen Sensors 15 in ein Bauteil des Vorsatzgerätes 2 kann eine Verstärkung des Signals sowie eine Abschirmung von Umgebungsgeräuschen erreicht werden. Zudem bietet die Integration Schutz vor Feuchtigkeit, Schmutz, Staub und dergleichen.

Eine vorteilhafte Weiterbildung sieht vor, dass der zumindest eine Sensor 15 an und/oder in einem Bodenelement des Vorsatzgerätes 2 angeordnet ist, wobei das Bodenelement im Wesentlichen plattenförmig und/oder als Hohlkörper ausgebildet sein kann. Beispielsweise könnte der zumindest eine Sensor 15 in ein als Hohlkörper ausgeführtes Bodenblech 22 als Bodenelement der Aufnahmevorrichtung 3 integriert sein.

In Fig. 3 ist schematisch und exemplarisch eine Ansicht der Aufnahmevorrichtung 3 gemäß Fig. 2 im Längsschnitt dargestellt. Hier ist der zumindest eine Sensor 15 in der Förderschnecke 21 angeordnet. Dabei ist vorgesehen, dass der zumindest eine Sensor 15, hier und vorzugsweise das Mikrofon 20, an und/oder auf zumindest einer stehenden Welle 23 angeordnet ist. Die stehende Welle 23 ist über zumindest eine Lagerstelle 24 gegenüber der Förderschnecke 21 gelagert, so dass die Förderschnecke 21 relativ zur Welle 23 um diese rotieren kann. Bevorzugt ist die zumindest eine Lagerstelle 24 im Flansch 25 der Förderschnecke 21 angeordnet. Insbesondere ist die zumindest eine Lagerstelle 24 als Gleitlager ausgeführt.

Fig. 3 veranschaulicht weiterhin beispielhaft die zueinander räumlich beabstandete Anordnung mehrerer Sensoren 15 nebeneinander an und/oder in dem Vorsatzgerät 2. Hier sind beispielhaft mehrere Mikrofone 20 in das Bodenblech 22 als Bauteil der Aufnahmevorrichtung 3 integriert angeordnet. Dadurch kann eine räumliche Detektion des Fremdkörpers FK erreicht werden, wodurch eine Vereinfachung der Lokalisierung des Fremdkörpers FK durch einen Bediener der Erntemaschine 1 ermöglicht wird. Die Anordnung mehrerer Sensoren 15 zur Bestimmung der Position des Fremdkörpers FK quer zur Fahrtrichtung nebeneinander kann symmetrisch oder asymmetrisch vorgesehen sein.

Insbesondere kann die Auswerteeinheit 16 dazu eingerichtet sein, die akustisch bestimmte Lage des Fremdkörpers FK im Erntegut als Information mittels einer Benutzerschnittstelle an eine Bedienperson auszugeben. Bevorzugt kann die Information räumlichen der Lage des Fremdkörpers FK durch die Benutzerschnittstelle visualisiert werden.

Die Darstellung in Fig. 4 zeigt schematisch und exemplarisch eine Teilansicht der Aufnahmevorrichtung 3 gemäß Fig. 2 in einer perspektivischen Ansicht von der Seite. Entsprechend der Ausführung der Anordnung des zumindest einen Sensors 15 in der Förderschnecke 21 kann zumindest ein als Mikrofon 20 ausgeführter Sensor 15 im Inneren der Rollen 19 des Niederhalters 18 angeordnet sein. Auch hier kann der jeweilige Sensor 15 auf einer gegenüber den Rollen 19 feststehenden Welle angeordnet sein.

Eine räumlich zueinander beabstandete Anordnung mehrere Sensoren 15 hintereinander entlang des Gutflussverlaufes an und/oder in dem Vorsatzgerät 2 ermöglicht es, den aufgenommenen Fremdkörper FK zeitlich versetzt zu detektieren. Die Anordnung mehrerer Sensoren 15 hintereinander kann bevorzugt mit der weiter oben beschriebenen Anordnung von mehreren Sensoren 15 nebeneinander kombiniert werden.

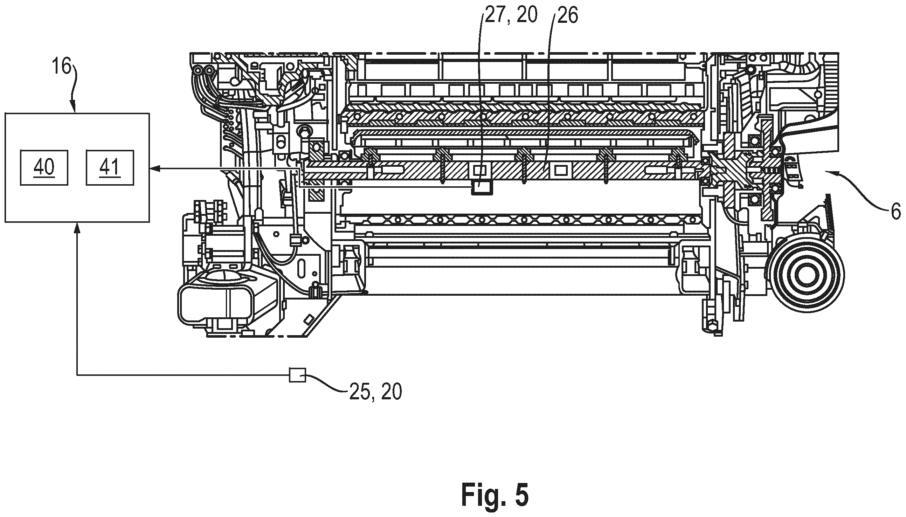

In Fig. 5 ist schematisch und exemplarisch eine Teilschnittansicht der Einzugvorrichtung 6 der als Feldhäcksler 2 ausgeführten Erntemaschine 1 dargestellt. Die im unteren Bereich des Einzuggehäuses 7 angeordnete vordere ortsfeste Einzugwalze 8A ist auf einer feststehenden Welle 26 drehbar gelagert. Auf der Welle 26 ist zumindest ein weiterer als Mikrofon und/oder Klopfsensor ausgeführter Sensor 27 angeordnet. Es können auch hier mehrere Sensoren 27, vorzugsweise der gleichen Art, beabstandet nebeneinander auf der Welle 26 angeordnet sein. Der auf der Welle 26 angeordnete Sensor 27 ist mit der Auswerteeinheit 16 signaltechnisch verbunden, um von dem zumindest einen Sensor 27 generierte Signale auszuwerten. Weiterhin kann auch die hintere ortsfeste Einzugwalze 8B mit einem als Mikrofon oder Klopfsensor ausgeführten Sensor 27 im Inneren der Einzugwalze 8B ausgeführt sein.

Gemäß einer Weiterbildung kann die Anordnung mehrerer Sensoren 15 zueinander räumlich beabstandet entlang des Gutflussverlaufes zumindest an und/oder in dem Vorsatzgerät 2 vorgesehen sein, um den Fremdkörper FK zeitlich versetzt zu detektieren. Hierdurch kann zum einen die Wahrscheinlichkeit einer Detektion eines vom Vorsatzgerät 2 aufgenommenen Fremdkörpers FK erhöht werden. Zum anderen lässt sich die Genauigkeit der Bestimmung der Art des Fremdkörpers FK verbessern, indem Signale mehrerer voneinander unabhängiger Sensoren 15 ausgewertet werden.

Die Auswerteeinheit 16 der Fremdkörperdetektionseinrichtung ist zum Ausführen einer Sensorfusion bezüglich der Daten der als Mikrofone 20 und/oder Körperschallsensoren ausgeführten Sensoren 15 zumindest des Vorsatzgerätes 2 ausgeführt und eingerichtet. Zusätzlich können auch die Daten des zumindest einen als Mikrofone und/oder Körperschallsensoren ausgeführten Sensors 27 der Einzugvorrichtung 6 im Rahmen der Sensorfusion verwertet werden.

Hierzu kann die Fremdkörperdetektionseinrichtung eine Fusionsrecheneinheit 40 umfassen, die zum Ausführen einer Sensorfusion bezüglich der Daten der Sensoren 15 der Fremdkörperdetektionseinrichtung zumindest des Vorsatzgerätes 2 ausgeführt und eingerichtet ist.

Des Weiteren umfasst die Fremdkörperdetektionseinrichtung zumindest einen Signalfilter 41, der dazu ausgeführt und eingerichtet ist, Störgeräusche der von dem zumindest einen Sensor 15 empfangenen Signale zu unterdrücken.

Durch den zumindest einen Signalfilter 41 kann die Analyse der durch den zumindest einen Sensor 15 erfassten Geräusche auf ein spezifisches Frequenzspektrum begrenzt werden, welches für massive nichtmetallische Fremdkörper charakteristisch ist.

Die Fusionsrecheneinheit 40 sowie Fremdkörperdetektionseinrichtung der zumindest eine Signalfilter 41 können in die Auswerteeinheit integriert sein. Der zumindest eine Signalfilter 41 kann als analoger Signalfilter und/oder digitaler Signalfilter ausgeführt sein.

Die Auswerteeinheit 16 ist dazu eingerichtet, zur Identifikation des im Vorsatzgerät befindlichen Fremdkörpers FK eine Signalanalyse mittels eines darin hinterlegten Transformationsalgorithmus, insbesondere mittels Wavelet-Transformation, durchzuführen.

An der Unterseite des Vorsatzgerätes 2 kann zumindest eine durch Fremdkraft betätigbare Abscheidevorrichtung angeordnet sein, durch welche ein im Vorsatzgerät 2 detektierter Fremdkörper FK abscheidbar ist. Die Abscheidevorrichtung umfasst zumindest ein im Bodenelement bzw. Bodenblech 22 angeordnetes Verschlusselement. Das zumindest eine Verschlusselement ist dazu eingerichtet, sich zwischen zwei Positionen zu bewegen, in welchen das zumindest eine Verschlusselement zumindest eine Ausschleuseöffnung im Bodenblech 22 entweder freigibt oder verschließt. Vorteilhaft ist dabei, dass die Abscheidung des aufgenommenen Fremdkörpers FK während des laufenden Erntevorgangs erfolgen kann. Eine Unterbrechung der Vorwärtsbewegung der Erntemaschine 1 ist, abhängig vom Ort und/oder Zeitpunkt der Detektion des Fremdkörpers FK, insbesondere bei der Detektion im Vorsatzgerät 2, nicht zwingend erforderlich.

Hierbei kann das Verschlusselement einteilig und sich im Wesentlichen über die Breite des Bodenelementes bzw. Bodenbleches 22 erstreckend ausgeführt sein. Somit kann sich die Ausschleuseöffnung im Wesentlichen über die Breite des Bodenelementes bzw. bzw. Bodenbleches 22 erstrecken.

Insbesondere kann die Abscheidevorrichtung passiv durch den auszuschleusenden Fremdkörper FK oder aktiv durch zumindest einen Aktuator betätigbar sein. Die passive Betätigung der Abscheidevorrichtung kann durch die Gewichtskraft des auszuschleusenden Fremdkörpers FK bewirkt werden. Eine aktive Betätigung der Abscheidevorrichtung durch den zumindest einen Aktuator wird in Abhängigkeit von der Detektion des Fremdkörpers FK durch die Fremdkörperdetektionseinrichtung initiiert.

Alternativ können mehrere einzelne Verschlusselement nebeneinander angeordnet sein. Insbesondere können die einzelnen Verschlusselemente voneinander unabhängig zwischen den zwei Positionen bewegbar sein, so dass die zumindest eine Ausschleuseöffnung zum Ausschleusen des Fremdkörpers FK nur einen Teil des Bodenelementes bzw. Bodenbleches 22 freigibt. Dies hat den Vorteil, dass der Anteil an mit dem Fremdkörper FK ausgeschleusten Erntegut minimiert werden kann. Weiterhin können die Breite des Bodenelementes bzw. Bodenbleches 22 verteilt an zwei oder mehr Stellen Ausschleuseöffnungen durch die einzelnen Verschlusselemente freigegeben werden.

Das zumindest eine Verschlusselement kann als ein klappenförmiges Bauteil ausgeführt sein, welches bezüglich einer Drehachse positionsveränderbar ist. Das zumindest eine Verschlusselement um eine Drehachse schwenkbar angeordnet sein. Dazu kann das zumindest eine Verschlusselement an der Drehachse angelenkt sein. Alternativ kann das zumindest eine Verschlusselement mittels eines Viergelenkes oder eines Parallelgramms um die Drehachse schwenkbar sein.

Das zumindest eine Verschlusselement kann dazu ausgeführt und angeordnet sein, dass es die zumindest eine Ausschleuseöffnung in Bewegungsrichtung oder entgegen der Bewegungsrichtung der Erntemaschine 1 freigibt.

Hierzu kann die Fremdkörperdetektionseinrichtung dazu ausgeführt und eingerichtet seine, bei der Detektion eines Fremdkörpers FK im Vorsatzgerät 2 den Aktuator zur Betätigung des zumindest einen Verschlusselementes anzusteuern. Der Aktuator kann dazu eingerichtet sein, das zumindest eine Verschlusselement temporär aus einer geschlossenen Position in eine geöffnete Position zu überführen, um den Fremdkörper FK auszuschleusen. Auf diese Weise kann der Fremdkörper FK aus dem Erntegut abgeschieden werden, bevor der Fremdkörper FK die Einzugvorrichtung 6 erreichen kann.

Weiter kann vorgesehen sein, dass die Fremdkörperdetektionseinrichtung dazu ausgeführt und eingerichtet ist, das Öffnen des zumindest einen Verschlusselementes georeferenziert aufzuzeichnen und abzuspeichern. Somit lassen sich die durch die Abscheidevorrichtung ausgeschiedenen Fremdkörper FK nach der Bearbeitung eines Feldes einfacher auffinden und bergen.

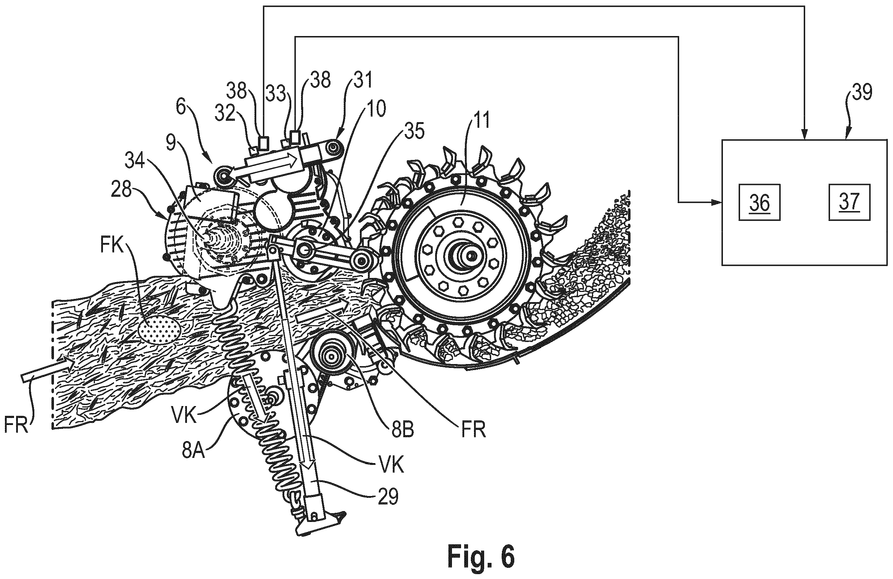

Die Darstellung in Fig. 6 zeigt schematisch und exemplarisch eine Teilansicht der Einzugvorrichtung 6 des Feldhäckslers 1. Die Presswalzen 9, 10 sind höhenbeweglich an zumindest einem Lenker 28 angeordnet, wobei wenigstens eine der Presswalzen 9, 10 durch Vorpresszylinder 29 vorgespannt ist. Im dargestellten Ausführungsbeispiel sind die vordere Presswalze 9 und die hintere Presswalze 10 durch jeweils beidseitig angeordnete Vorpresszylinder 29 mit einer Vorspannkraft VK beaufschlagt. Alternativ kann die vordere Presswalze 9 durch beidseitig angeordnete Zugfedern mit einer Vorspannkraft VK beaufschlagt sein.

Für eine im Wesentlichen gleichmäßige Verteilung der Vorpresskraft VK auf beide Presswalzen 9, 10 ist wenigstens ein Dämpfungszylinder 31 vorgesehen. Bevorzugt ist beidseitig der Presswalzen 9, 10 jeweils ein Dämpfungszylinder 31 angeordnet. Der wenigstens eine Dämpfungszylinder 31 erstreckt sich im Wesentlichen parallel zur Förderrichtung FR des Erntegutes. Der wenigstens eine Dämpfungszylinder 31 ist mit einem Ende an dem zumindest einen Lenker 28 und mit seinem anderen Ende am Einzuggehäuse 7 angelenkt. Die vordere Presswalze 9 dreht um eine Drehachse 34 und die hintere Presswalze 10 dreht um eine Drehachse 35.

Der zumindest eine Dämpfungszylinder 31 ist mit einem mit Dämpfungsmedium befüllbar oder befüllt, hier und vorzugsweise Hydrauliköl. Der zumindest eine Dämpfungszylinder 31 weist eine zumindest bereichsweise innerhalb des Dämpfungszylinders 31 geführte Kolbeneinrichtung auf, welche einen an einer Kolbenstange gehaltenen, in dem Dämpfungszylinder 31 geführten Kolben umfasst. Der Dämpfungszylinder 31 weist einen auf der Kolbenstangenseite angeordneten Einlass 32 und einen auf der Kolbenseite angeordneten Auslass 33 auf.

Das der Einzugvorrichtung 6 zugeführte Erntegut bewirkt eine im Wesentlichen gleichmäßige vertikale Auslenkung der vorderen und hinteren Presswalze 9, 10 entgegen der Vorspannkraft VK der Vorpresszylinder 29. Der Dämpfungszylinder 31 reagiert auf Auf- und Abbewegungen der vorderen und hinteren Presswalze 9, 10 aufgrund von Schwankungen der zugeführten Erntegutmasse mit einer Druckänderung.

Gelangt mit dem Erntegut der nichtmetallische Fremdkörper FK, insbesondere ein Stein, zwischen die ortsfeste Einzugwalze 8A und die vordere Presswalze 9, führt dies zunächst zu einer schlagartigen Auslenkung der vorderen Presswalze 9 in vertikaler Richtung entgegen der Vorspannkraft VK der Vorpresszylinder 29. Die hintere Presswalze 10 verbleibt dabei zunächst in ihrer Position. Die schlagartige Auslenkung der vorderen Presswalze 9 in im Wesentlichen vertikaler Richtung führt zu einer korrespondierenden Drehbewegung 30 der vorderen Presswalze 9 um die Drehachse 35 der hinteren Presswalze 10 als Drehpunkt. Diese schlagartige Drehbewegung 30 der vorderen Presswalze 9 um die Drehachse 35, die nachfolgend auch als Nickbewegung 30 bezeichnet wird, führt dazu, dass der Dämpfungszylinder 31 schneller zusammengedrückt wird als dies bei Schwankungen in der zugeführten Erntegutmasse der Fall ist.

Der Einzugvorrichtung 6 ist eine Regeleinrichtung 39 zugeordnet, welche den zumindest einen Dämpfungszylinder 31 sowie eine Recheneinheit 36 und eine Speichereinheit 37 umfasst. In der Speichereinheit 37 ist zumindest ein Kennlinienfeld hinterlegt oder hinterlegbar ist, welches von der Recheneinheit 36 zur Analyse des Vorhandenseins eines Fremdkörpers FK in der Einzugvorrichtung 6 verwendet wird. Die Recheneinheit 36 ist dazu eingerichtet, von der Auswerteinheit 16 der Fremdkörperdetektionseinrichtung bereitgestellte Daten zur Adaption des zumindest einen Kennlinienfeldes zu verwenden.

Die Nickbewegung 30 wird durch den wenigstens einen Dämpfungszylinder 31 gedämpft. Die Dämpfung der von der vorderen Presswalze 9 ausgeführten Nickbewegung 30 führt zu einem signifikanten Druckanstieg in dem wenigstens einen Dämpfungszylinder 31, was als Kriterium für das Vorhandensein des nichtmetallischen Fremdkörpers FK gewertet wird. Der Druckanstieg in dem wenigstens einen Dämpfungszylinder 31 ist wegen der durch die im Wesentlichen in vertikaler Richtung erfolgende Auslenkung der vorderen Presswalze 9 verursachten Nickbewegung 30 in Relation zum dadurch in den Vorpresszylindern 29 der vorderen Presswalze 9 hervorgerufenen Druckanstieg größer. Der wenigstens eine Dämpfungszylinder 31 reagiert somit unmittelbar mit einem Druckanstieg auf das Auftreten eines Fremdkörpers FK zwischen der vorderen Presswalze 9 und der gegenüberliegenden Einzugwalze 8A.

Der Einlass 32 ist durch eine Zuleitung mit einer Druckquelle verbunden, beispielsweise mit einer Hydraulikpumpe oder einem Hydrauliksystem des Feldhäckslers 2. Der Auslass 33 ist durch eine Leitung mit einem Tank verbunden. Dem Einlass 32 ist eine Einlassblende vorgeordnet. Dem Auslass 33 ist eine Auslassblende nachgeordnet. Der Öffnungsquerschnitt der Einlassblende ist kleiner als der Öffnungsquerschnitt der Auslassblende. Durch die Drosselung des Dämpfungszylinders 31 wird die Dämpfungswirkung erreicht. Tritt die Nickbewegung 30 aufgrund des zwischen der vorderen Presswalze 9 und der gegenüberliegenden Einzugwalze 8A befindlichen Fremdkörpers FK auf, führt die Drosselung zu einem signifikanten Druckanstieg im Dämpfungszylinder 31.

Um den Druckanstieg zu erfassen, ist vorgesehen, dass zumindest ein Drucksensor 38 am Auslass 33 und/oder am Einlass 32 des Dämpfungszylinders 31 angeordnet ist, welcher den dort auftretenden Druck erfasst. Insbesondere erfasst der zumindest eine Drucksensor 38 den Druck vor der Auslassblende 33 und/oder der vor Einlassblende 32.

Die Drucksignale des zumindest einen Drucksensors 27 werden der Regeleinrichtung 39 zugeführt. Die Regeleinrichtung 39 ist dazu ausgeführt und eingerichtet, zur Bestimmung des Vorhandenseins des Fremdkörpers FK in der Einzugvorrichtung 6 eine detektierte Druckänderung am Auslass 33 oder eine Druckdifferenz zwischen Auslass 33 und Einlass 32 auszuwerten. Aus der Druckänderung am Auslass 33 oder einer Änderung der Druckdifferenz zwischen Auslass 22 und Einlass 32 wird darauf geschlossen, dass die detektierte Druckänderung auf einen zwischen die untere Einzugwalze 8A und vordere Presswalze 9 gelangten Fremdkörper FK zurückgeht.

Insbesondere können die Auswerteeinheit 16 und die Regelvorrichtung 39 als eine gemeinsame Einheit ausgeführt sein, welche die Auswertung der Signale der Sensoren 15, 27, 38 sowie die Ansteuerung zur Antriebsunterbrechung durchführt.

**Bezugszeichenliste**

| | | | |
|---|---|---|---|
| 1 | Feldhäcksler | 33 | Auslass |
| 2 | Vorsatzgerät | 34 | Drehachse |
| 3 | Aufnahmevorrichtung | 35 | Drehachse |
| 4 | Maiserntevorsatz | 36 | Recheneinheit |
| 5 | Aufsammeltrommel | 37 | Speichereinheit |
| 6 | Einzugvorrichtung | 38 | Drucksensor |
| 7 | Einzuggehäuse | 39 | Regeleinrichtung |
| 8A | Einzugwalze | 40 | Fusionsrecheneinheit |
| 8B | Einzugwalze | 41 | Signalfilter |
| 9 | Vordere Presswalze | | |
| 10 | Hintere Presswalze | FK | Fremdkörper |
| 11 | Messertrommel | FR | Förderrichtung |
| 12 | Konditioniervorrichtung | VK | Vorpresskraft |
| 13 | Nachbeschleunigervorrichtung | | |
| 14 | Auswurfkrümmer | | |
| 15 | Sensor | | |
| 16 | Auswerteeinheit | | |
| 17 | Gehäuse | | |
| 18 | Niederhalter | | |
| 19 | Rolle | | |
| 20 | Mikrofon | | |
| 21 | Förderschnecke | | |
| 22 | Bodenblech | | |
| 23 | Welle | | |
| 24 | Lagerstelle | | |
| 25 | Flansch | | |
| 26 | Welle | | |
| 27 | Sensor | | |
| 28 | Lenker | | |
| 29 | Vorpresszylinder | | |
| 30 | Nickbewegung | | |
| 31 | Dämpfungszylinder | | |
| 32 | Einlass | | |

## Patentansprüche

1. Landwirtschaftliche Erntemaschine (1), umfassend eine in einem Einzuggehäuse (7) angeordnete Einzugvorrichtung (6), ein an dem Einzuggehäuse (7) angeordnetes Vorsatzgerät (2) zur Aufnahme von Erntegut sowie zumindest ein der Einzugvorrichtung (6) nachgeordnetes Arbeitsaggregat (11), **dadurch gekennzeichnet, dass** dem Vorsatzgerät (2) eine Fremdkörperdetektionseinrichtung zugeordnet ist, welche dazu ausgeführt und eingerichtet ist, nichtmetallische Fremdkörper (FK) im Gutstrom innerhalb des Vorsatzgerätes (2) und/oder des Einzuggehäuses (7) zu detektieren.

2. Erntemaschine (1) nach Anspruch 1, **dadurch gekennzeichnet, dass** die Fremdkörperdetektionseinrichtung zumindest einen Sensor (15) aufweist, der als Mikrofon (20) und/oder Körperschallsensor ausgeführt ist, sowie eine Auswerteeinheit (16) zur Auswertung der von dem zumindest einen Sensor (15) bereitgestellten Signale.

3. Erntemaschine (1) nach Anspruch 2, **dadurch gekennzeichnet, dass** der zumindest eine Sensor (15) an und/oder in einem Bauteil des Vorsatzgerätes (2) und/oder des Einzuggehäuses (7) angeordnet ist, wobei das Bauteil als Resonanzkörper dient.

4. Erntemaschine (1) nach Anspruch 2 oder 3, **dadurch gekennzeichnet, dass** der zumindest eine Sensor (15) am Gehäuse (17) und/oder am Rahmen des Vorsatzgerätes (7) und/oder des Einzuggehäuses (7) angeordnet ist.

5. Erntemaschine (1) nach einem der Ansprüche 2 bis 4, **dadurch gekennzeichnet, dass** der zumindest eine Sensor (15) an und/oder in einem Bodenelement (22) des Vorsatzgerätes (2) angeordnet ist, wobei das Bodenelement (22) im Wesentlichen plattenförmig und/oder als Hohlkörper ausgebildet ist.

6. Erntemaschine (1) nach einem der vorangehenden Ansprüche, **dadurch gekennzeichnet, dass** mehrere Sensoren (15) zueinander räumlich beabstandet entlang des Gutflussverlaufes an und/oder in dem Vorsatzgerät (2) und/oder des Einzuggehäuses (7) angeordnet sind, um den Fremdkörper (FK) zeitlich versetzt zu detektieren.

7. Erntemaschine (1) nach einem der vorangehenden Ansprüche, **dadurch gekennzeichnet, dass** mehrere Sensoren (15) zueinander räumlich beabstandet nebeneinander an und/oder in dem Vorsatzgerät (2) und/oder des Einzuggehäuses (7) angeordnet sind, um den Fremdkörper (FK) räumlich zu detektieren.

8. Erntemaschine (1) nach Anspruch 6 oder 7, **dadurch gekennzeichnet, dass** die Auswerteeinheit (16) zum Ausführen einer Sensorfusion bezüglich der Daten der als Mikrofone (20) und/oder Körperschallsensoren ausgeführten Sensoren (15) zumindest des Vorsatzgerätes (2) ausgeführt und eingerichtet ist.

9. Erntemaschine (1) nach einem der vorangehenden Ansprüche, **dadurch gekennzeichnet, dass** im unteren Bereich des Einzuggehäuses (7) der Einzugvorrichtung (6) untere ortsfeste Einzugwalzen (8A, 8B) angeordnet sind und im oberen Bereich des Einzuggehäuses (7) eine vordere Presswalze (9) und eine hintere Presswalze (10) höhenbeweglich an zumindest einem Lenker (28) angeordnet sind, wobei wenigstens eine der Presswalzen (9, 10) durch Vorpresszylinder (29) vorgespannt ist, wobei in einer der Einzugwalzen (9, 10) wenigstens ein zusätzlicher als Mikrofon (20) und/oder Körperschallsensor ausgeführter Sensor (27) angeordnet ist.

10. Erntemaschine (1) nach Anspruch 9, **dadurch gekennzeichnet, dass** der Einzugvorrichtung (6) eine Regeleinrichtung (39) zugeordnet ist, welche eine Recheneinheit (37) und eine Speichereinheit (38) umfasst, in welcher zumindest ein Kennlinienfeld hinterlegt oder hinterlegbar ist, welches von der Recheneinheit (37) zur Analyse des Vorhandenseins eines Fremdkörpers (FK) in der Einzugvorrichtung (6) verwendet wird, wobei die Recheneinheit (37) dazu eingerichtet ist, von der Fremdkörperdetektionseinrichtung bereitgestellte Daten zur Adaption des zumindest einen Kennlinienfeldes zu verwenden.

11. Erntemaschine (1) nach Anspruch 9 oder 10, **dadurch gekennzeichnet, dass** wenigstens ein regelbar mit Druck beaufschlagter Dämpfungszylinder (31) zur Dämpfung einer Ausweichbewegung einer der Presswalzen (9, 10) mit einem Ende an zumindest einem der Lenker (28) und mit seinem anderen Ende am Einzuggehäuse (7) angelenkt ist, wobei durch Auswertung von sensorisch erfassten Drucksignalen, die auf einen im Dämpfungszylinder (31) und/oder der Vorpresszylinder (29) detektierten Druckanstieg zurückgehen, auf das Vorhandensein eines Fremdkörpers (FK) in der Einzugvorrichtung (6) geschlossen wird.

12. Erntemaschine (1) nach einem der vorangehenden Ansprüche, **dadurch gekennzeichnet, dass** an der Unterseite des Vorsatzgerätes (2) eine durch Fremdkraft betätigbare Abscheidevorrichtung angeordnet ist, durch welche ein detektierter Fremdkörper (FK) abscheidbar ist, wobei die Abscheidevorrichtung zumindest ein im Bodenelement (22) angeordnetes Verschlusselement umfasst, welches dazu eingerichtet ist, sich zwischen zwei Positionen zu bewegen, in welchen das zumindest eine Verschlusselement zumindest eine Ausschleuseöffnung entweder freigibt oder verschließt.

13. Erntemaschine (1) nach Anspruch 12, **dadurch gekennzeichnet, dass** die Fremdkörperdetektionseinrichtung dazu ausgeführt und eingerichtet ist, bei der Detektion eines Fremdkörpers (FK) einen Aktuator zur Betätigung des zumindest einen Verschlusselementes anzusteuern.

14. Erntemaschine (1) nach Anspruch 12 oder 13, **dadurch gekennzeichnet, dass** die Fremdkörperdetektionseinrichtung dazu ausgeführt und eingerichtet ist, das Öffnen des zumindest einen Verschlusselementes georeferenziert aufzuzeichnen und abzuspeichern.

15. Erntemaschine (1) nach einem der vorangehenden Ansprüche, **dadurch gekennzeichnet, dass** der zumindest eine Sensor (15) auf zumindest einer stehenden Welle (23) im Inneren von rotierenden schneckenförmigen und/oder walzenförmigen Elementen des Vorsatzgerätes (2) und/oder der Einzugvorrichtung (6) angeordnet ist.
